# EUROPEAN PATENT APPLICATION

(11) **EP 1 887 442 A1**
(43) Date of publication of application: **13.02.2008**
(21) Application number: 06016745.9
(22) Date of filing: 10.08.2006
(51) Int. Cl.: G05B 13/02

(54) **Method of automatically tuning motor controller and motor controller**

(71) Applicant: ROBERT BOSCH GMBH, 70442 Stuttgart (DE)
(72) Inventor: Uijen, Huub Anton, 5231 XN 's-Hertogenbosch (NL); Bosscher, Kasper, 5611 JA Eindhoven (NL); Schmeits, Cedric, 5421 MC Gemert (NL); Van De Heijning, Jeroen, 5611 KX Eindhoven (NL); Solberg, Ramon D., 6365 BB Schinnen (NL)
(74) Representative: Thürer, Andreas

(57) **Abstract**

The stability and/or robustness and/or performance of the motor controller system (1) is automatically evaluated and improved by the following steps:
1.1 generate a plant transfer function (H) from the system transfer function (CH) by eliminating from the system transfer function (CH) previously known controller contribution,
1.2 define a modified motor controller parameter set,
1.3 generate multiple values of a modified system transfer function (C' H) out of the plant transfer function (H), using the modified controller parameter set, the multiple values representing a practically continuous frequency range, where the practically continuous frequency range corresponds to the relevant operating frequency range (5) of the motor controller system (1),
1.4 evaluate stability and/or robustness and/or performance of the motor controller system (1) using the modified system transfer function (C'H),
1.5 improving the motor controller system (1) by defining different modified controller parameter sets, executing steps 1.3 to 1.4 for each modified controller parameter set and identifying the best parameter set out of the different controller parameter sets using the evaluations done according to 1.4.

## Description

The invention relates to a method of automatically adjusting parameters of a motor controller system, according to the preamble of claim 1, and to an electrical motor controller according to claim 19.

Such technology is in principle known from patent application EP 1 180 733 A1. In it, a method is described to adjust parameters of a motor controller system automatically, the system comprising an electrical motor, a corresponding motor controller with a control loop, and a load driven by the electric motor, the motor controller system having kinematic characteristics relevant for controlling the system. Into the control loop of the motor controller system multiple frequency test signals are injected sequentially. The test signals are intended to cover relevant, multiple frequencies. From the system response, the system transfer function of the motor controller system is measured, whereby the multiple frequencies are intended to represent the relevant operating frequency range.

The EP 1 180 733 A1 is using the measurement of the system transfer function to adjust regulating parameters of the controller to set the gain and phase margins within the set of predetermined values. This method suffers from the drawbacks, that the defined controller parameter set resulting from the method may be somewhat inaccurate. By the injection of the test signals into the system, the system is undergoing mechanical stress and even the risk of damage of the system.

It is an object of this invention to provide an accurate, comprehensive retrieval of motor controller parameters;

It is a further object of this invention to reduce, especially mechanical, stress on the system and still to provide usable, suitable controller parameters;

It is still a further object of this invention to simplify the known method and to reduce complexity and time required for the retrieval of a suitable controller parameter set.

The above named tasks, or parts or some of the above named tasks, are accomplished by the features of claim 1 with regard to the method and claim 19 with regard to the electrical motor controller.

The invention yields an accurate, simple approach, that still does exert less stress, especially mechanical stress; on the system.

The invention achieves these goals in that the stability and/or performance and/or robustness of the motor controller system is automatically evaluated and improved by the steps of the method invention:

The whole method, and the whole invention, may occur in the frequency domain. First, the plant transfer function is generated from the system transfer function by eliminating from the system transfer function previously known controller contribution. If, for example, an initial set of controller parameters were used, these controller parameters and thereby the controller characteristics are known; thus they can be eliminated. The elimination may be by calculating the controller contribution and subtracting (or, if e.g. it is considered in the frequency domain and is a contribution connected in series, by dividing), or otherwise removing it from the system transfer function.

This gives the advantage; that a specific transfer function, the plant transfer function, is obtained, which is especially independent of any controller influence, and therefore represents the plant, or the kinematic behaviour of the plant, that is e.g. the motor, especially together with the attached load. Ideally, no further measurements of transfer functions will be required, so that time is saved and mechanical stress on the system is avoided or reduced.

Once the plant transfer function is known, a modified controller parameter set is defined, and multiple values of a modified system transfer function are generated out of the plant transfer function; for that, the modified controller parameter set may be used. This can be done in mathematical calculations in the frequency domain, and especially requires no further measurements and requires little time. The multiple values, although preferably discrete, digital values, may still be representing a practically continuous frequency range, and may still correspond to the relevant, expected operating frequency range of the motor controller system.

After that, stability and/or robustness and/or performance of the motor controller system is evaluated using the modified system transfer function. This can be done by e.g. calculating from the modified system transfer function a value or values that represents/represent the desired, above-mentioned features. The stability may include the deviations of the compensation behaviour of the controller system in time, the robustness may include the sensitivity or susceptibility of the system stability against, especially larger, disturbances, the performance may include the tuning-in behaviour and/or the time required for the system to reach the desired kinematic state, and/or time, quality and/or quantity of control overshoot reactions.

E:g., the evaluation can be done using straightforward, known methods, such as to determine the stability using the gain margin and/or the phase margin. The gain margin is the difference in the gain value at the phase crossover frequency and 0 dB. The phase margin is the difference in the phase value at the gain crossover frequency and -180°. Nevertheless, the invention opens up a wide variety of further improvements of the evaluation, as will be described herein later on.

The motor controller system is thereby improved by defining different modified controller parameter sets, executing the steps of generation of multiple values of a modified system transfer function and the step of evaluation mentioned above, for each modified controller parameter set and identifying the best or at least a well suited parameter set out of the different controller parameter sets using the evaluations done according to claim portion 1.4.

The aforementioned method is more accurate and/or more comprehensive with regard to the operating frequency range, if for each of the multiple values of the modified system transfer function a local evaluation value is generated, that is relevant for the stability and/or robustness and/or performance of the motor controller system locally, i.e. at the corresponding frequency, and out of all local evaluation values at least one global evaluation value is generated, that represents stability and/or robustness and/or performance of the motor controller system using the modified controller parameter set, combining all local evaluation values into a total resulting stability and/or robustness and/or performance indication, representing a part of, or even the entire, continuous frequency range, and, finally, using the global evaluation value for evaluation according to feature 1.4 of claim 1.

This method results in an accurate evaluation, that can be representing the controller behaviour or the system behaviour, considering the actually checked motor controller parameter set, all for a certain range of relevant frequencies and more preferred over the entire, desired frequency range that may be relevant during operation of the motor controller system. Generally speaking, the method thus represents the controller behaviour not for only just two points in of the respective curve in the Nyquist diagram, but for at least three points, and more preferably for many more points. The automatic tuning of the system can thus be of very good performance in terms of accuracy, coverage of the desired operation frequency range, flexibility and reduced stress on the system during the tuning process. It can keep up, or even exceed, the performance of an experienced person skilled in the art. This will be explained in more detail later on.

In order that the retrieval of the system transfer function, and therefore the generation of the plant transfer function from the system transfer function to be more accurate, it is suggested, that before injecting the test signals into the loop, polarity, breakaway level, noise level, and preliminary controller gain of the motor controller system are determined to control the motor controller system within predefined, rough preliminary precision limits. Therefore, the motor controller system has at least one position feedback. E.g., by sending a positive control signal the feedback/encoder should also measure a positive movement. If this is the case, there will be a good feedback coupling. If the measured position is negative, the encoder has been wired backwards and the polarity (the sign of the encoder signal) must be inverted to obtain a good feedback coupling. The polarity of the system can be measured by doing a ramp excitation on the axis for example. By applying slowly increasing voltage and by looking at the precision measurement the so-called breakaway voltage can be detected. Further, a reference movement can be used, e.g. in a jog mode or in a sine wave mode. These initial steps can be performed automatically or manually.

The procedure will be more straightforward, faster and more accurate, if the results of the above determination are used for a first motor controller parameter set, which is used during injection of the test signals and measurement according to claim 1 above.

In order to obtain a comprehensive retrieval of the system transfer function in a short time, the invention proposes, that the test signal is a random noise signal. This random noise signal does not need to be representing the whole frequency spectrum available; it is sufficient, if it represents expected or regular frequency ranges used in a regular environment, e.g., in industrial automation. This random noise signal could, for example, cover frequency ranges of 1 Hz up to 500 or even 1000 Hz.

The method is well adapted and will lead to comprehensive, accurate, usable results, if the controller is P or PI controller and has a lead lag filter and/or notch filter and/or lowpass filter, and the parameter set comprises the respective parameters. E.g., critical frequency crossover points could be identified with the above-mentioned method, and respective filter parameters could be adjusted in order to eliminate the respective critical frequencies. Further, the proportional gain or proportional and integral parameters for controlling could be determined. Also, other filters such as lead/lag and/or notch filters can be included into the tuning method.

On the one hand, integrated circuits have become very small and powerful, and, on the other hand, the invention can be carried out by the use of electronic digital data processing entirely. E.g., a fast Fourier transform (FFT) method can be adopted to implement part of the invention. Therefore, the objects are achieved with minimum hardware requirements and with maximum flexibility and an autonomous system is accomplished, if the functionalities are partly or completely implemented into a DSP (digital signal processor) and/or FPGA (field programmable gate array).

Alternatively or additionally, the functionalities may partly or completely be implemented into a hardware separate from the controller hardware, especially into a PC and/or a notebook and/or a customised implementing hardware. The method could then partly or completely be carried out by connecting the controller or the like to the PC, notebook or other suitable hardware, and executing on this hardware accordingly. It could be performed, e.g., during setup or maintenance, or regularly repeated by external or internal personnel carrying out the a.m. procedures.

It is preferred, that the results from the method are stored in a data file, especially an xml-file, which comprises at least a partial controller parameter set, and which is usable for different but similar motor controller systems. Thereby, time and effort can be saved, if the best parameter set or one of the best parameter sets is stored and is used for similar systems.

In order to minimise risk of damage and to have fast, straightforward and precise measurement, it is suggested, that the measurement of the system transfer function is done in closed loop configuration of the motor controller system.

The practically continuous frequency range preferably extends from 1 Hz to 1000 Hz, especially from 1 Hz to 500 Hz. With that frequency range, most industrial automation applications are taken into consideration and thus the invention is usable for most industrial automation applications.

It is further suggested, that from 3 to 4096 modified system FFT points are calculated, a preferable value is to take 1024 points. In order to achieve rapid performance and speed during the necessary calculations, to use calculating and memory resources efficiently, especially during the fast Fourier transform, the values generated are preferably, not necessarily, powers of two. The numbers of values generated may take into account desired speed, real time performance, available calculation and memory resources versus the desired accuracy of calculations, performance of the motor controller system, reliability and, generally speaking, operational requirements for the quality of the autotuning process.

To make the method efficient and calculations more rapid, the local evaluation value preferably contains the local sensitivity, or corresponding parameters, based on the open loop system transfer function.

The open loop transfer function is generally used in a so-called Nyquist diagram, to identify system instabilities and get an overview of the overall system performance. E.g., poles of the respective function may be more readily, more easily and reliably identified. Further, the absolute value may be the absolute of the local, complex value, i.e. at the respective frequency, of the function.

More preferably, the global evaluation value is derived by balancing the local evaluation values, especially the weighted sum or the integral of all local evaluation values, at frequencies substantially below a 0 dB crossing point of the absolute values of the modified system transfer function against the local evaluation values, especially the weighted sum or in the integral of all local evaluation values, at frequencies substantially above the 0 dB crossing frequency. By the described method of taking into consideration the absolute of the open loop transfer function values at the respective frequencies, a very straightforward and only little time consuming procedure is achieved. Generally speaking, the sum or the integral of the local evaluation values representing frequencies substantially below 0 dB crossing frequency have a gain above 1 (= 0 dB). That means, that at the respective frequencies the controller system will be able to compensate efficiently any disturbance of the controlled quantities.

The frequencies substantially above the 0 dB crossing point represent frequencies, at which the controller system will have a tendency not to be able to compensate for occurring disturbances; thus, since the respective frequencies are quite high, these represent areas in which disturbances cannot and shall preferably not be compensated for, since due to the high frequencies they have some noise quality. Thus, such values are arid should be ignored by the controller characteristic. The balancing can be done by, e.g. subtracting or dividing or otherwise to mathematical or electronically combine the two respective sums or integrals.

ln order to consider the full range of possible parameters, and especially also to consider points of critical crossover, especially resonant, frequencies, it is suggested, that the global evaluation-value is derived from the maximum local sensitivity considering the amount of encirclements of (-1,0) on the Nyquist plot in the open loop transfer function.

An efficient approach to generate good, especially suitable parameter sets, is, if the different modified controller parameter sets are generated by a global optimization method, such as a genetic algorithm, possibly in combination with rule of thumb estimation. E.g., in the genetic algorithms approach parameters for variance, selection, reproduction and termination can be determined. The genetic algorithms process is initiated with the selected initial "population" of controller parameter sets. Then the evaluation of the individual fitness of a proportion of the population is evaluated, parents of best ranking individuals to reproduce are selected and a new generation/crossover in mutation is bred until the terminating condition is fulfilled.

In order to speed up the feedback optimisation the parameter search space of the controller parameters is adapted every iteration in such a way that the a set of feasible controllers will remain. Thus, the dynamic parameter search space is narrowed in every optimization step. This speeds up the optimisation procedure by forcing the solution in a specific direction. Some examples of the search space adaption are shown in the following table:

| lead filter | min | max | unit |
|---|---|---|---|
| pole (f₁) | f_{bw} | 4f_{bw} | [rad/s] |
| zeros (f₂) | f_{bw}/4 | f_{bw} | [rad/s] |
| notch filter | | | |
| damping factors (β₁β₂) | 1e-3 | 1 | [-] |
| freq. numerator (f₃) | f_{bw} | 1200 | [rad/s] |
| freq. denominator (f₄) | 4_{w} | 1200 | [rad/s] |

Finally, it is preferred, that the test signal is generated by a noise generator integrated into a DSP within the controller hardware; this yields a very autonomous and flexible controller system, that preferably doesn't require additional hardware, such as a PC or a notebook. The system will be operable in stand-alone configuration within the industrial automation environment.

The above-mentioned objects, advantages and technical solutions are also achieved by an electrical motor controller, which has an integrated or separate regulator, and which is configured and/or designed and/or programmed for executing the method according to one of claims 1 to 18.

Especially, such a controller or regulator has sufficient, preferably decentralised, digital signal processing capacity and controller intelligence to perform the aforementioned methods. In more detail, it has the capacity to do the necessary calculations, preferably in frequency domain, and in a timeframe, that meets the requirements of industrial automation environments. E.g., it needs to be able to perform the fast Fourier transform in the said timeframe.

Further, interfaces may be provided to couple to controller and/or the regulator to a PC or a notebook in order to have the possibility to perform straightforward and efficient set up and/for maintenance procedures.

The motor controller system needs a position and/for speed feedback, preferably an encoder and electrical measurement means and sensor means to determine the required quantities and perform the required measurements, preferably online and in a real time frame.

Further, normally the parameters of a fixed feedforward structure are tuned manually in series, minimizing the cumulative absolute error, with respect to a user specified setpoint. A drawback of this method is the fact that a series of local optima with respect to the individual feedforward parameters is reached. The new approach proposes an automatic parallel approach that can lead to global optimal values with respect to the defined criterion. The parameters are tuned iteratively parallel, with the machine in the loop. Several setpoints may be used in one iteration in order to optimise feedforward parameters for a set of setpoints. Feedforward parameters may be added as long as they can be described linear with respect to a state of the feedforward setpoint.

In the following, the invention will be described in more detail making reference to the attached figures. The figures comprise:
Figure 1 a block diagram showing a motor controller system in schematic representation, which system may be automatically tuned according to the invention;
Figure 2 a block diagram schematically showing a control loop according to the invention;
figure 3 a more detailed schematic representation of a control loop according to the invention;
figure 4 a schematic motion controller scheme, showing some details of the controller;
figure 5 a schematic representation of the Nyquist diagram of a selected, exemplary system;

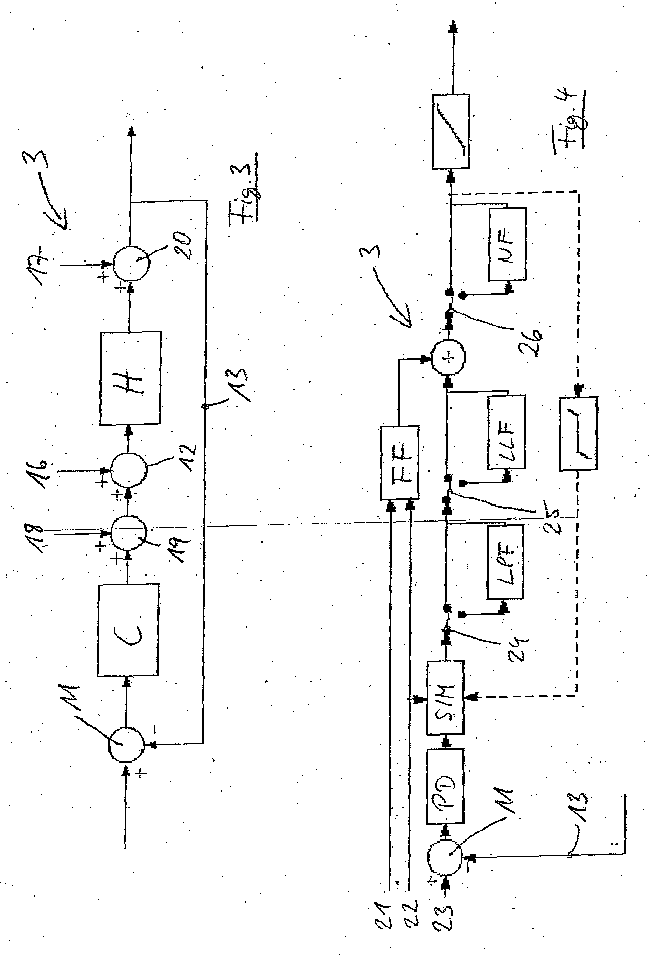

figure 5 b a schematic representation of the Nyquist diagram of another, exemplary system;

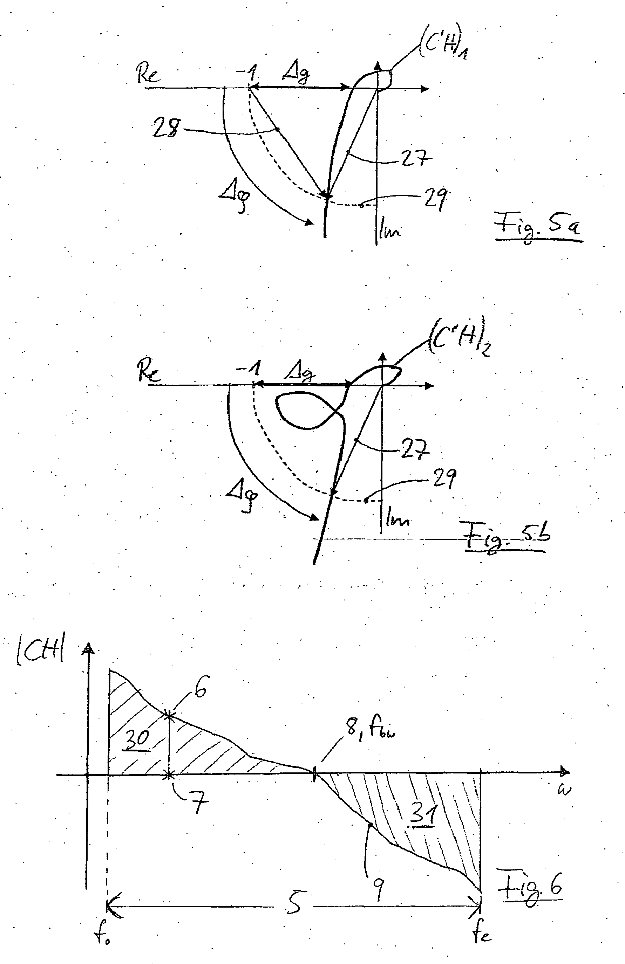

figure 6 a schematic diagram of an open loop partial Bode plot (absolutes only).

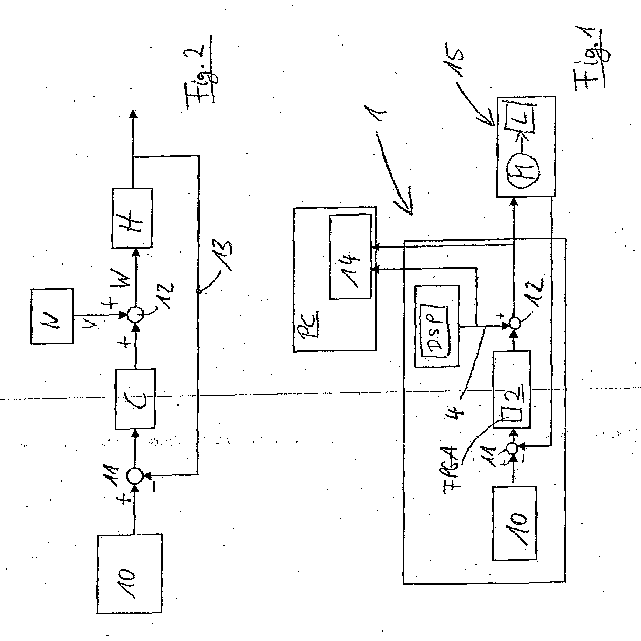

Referring now to figure 1, there is shown a motor controller system 1. The motor controller system 1 comprises an electrical motor M which is driving a load L. The driving relationship is indicated by an arrow pointing from the electrical motor to the load L. The system is simplified for reasons of clarity. The electrical motor M and the load L define substantially an electromechanical system. This electromechanical system 15 is controlled by the motor controller 2. The central processing core of the motor controller 2 is a field programmable gate array (FPGA). The electromechanical system 15 has kinematic characteristics relevant for controlling the system. Position set points and/or speed set points and/or acceleration set points are generated and/for forwarded by the set point generator 10. The setpoint generator 10 may be a different control or computer numeric control (CNC). The signal from the set point generator 10 is added to the input of the motor controller 2. The output of the motor controller 2 is then forwarded as drive control signal to the electrical motor M. The feedback from the electromechanical system 15 is fed back to the summing point 11 of the feedback, thus closing the control loop 3. According to the invention there is a DSP which generates a test signal 4 or several test signals 4, which is/are injected into the control loop 3 of the motor controller system 1 via the summing point 12 for the noise signal. At the same time, the test signal is forwarded to a PC. Moreover, the added control signal is also forwarded to the PC, especially to a function block 14 for data analysis. In this function block 14 a data analysis is performed, whereby also the comparison of the noise signal 4 and the control signal may be executed.

The test signal 4 generated by the DSP covers multiple frequencies, so that the system transfer function of the motor controller system 1 can be measured at such multiple frequencies, whereby the multiple frequencies represent a relevant operating frequency range. The sketched embodiment shows, how the system transfer function CH is in principle measured including the controller (2) contribution.

Referring now to figure 2, there is shown the controller transfer function C and the plant transfer function H in a more straightforward, frequency domain oriented notation. In this abstract representation in frequency domain, the plant transfer function H contains the behaviour in frequency domain of the plant, that is the electromechanical system or the respective response functions of the electromechanical system, the plant. Once more, the control loop is closed by the feedback signal 13 which is subtracted at the summing point 11, thus defining a regular, negative feedback control loop. Once more, the set point generator 10 is shown; it's set point signal is also added to the control loop signal at summing point 11. Between the controller transfer function C and the plant transfer function H the noise generator N is located, the noise signal V of which is injected into the control loop at summing point 12. The resulting signal that is inputted into the plant is denoted W. This figure 2 is a schematic representation of the abstract transfer functions in order to show the relationships in frequency domain, so that the present invention can be understood better.

The principle method of the invention will be described hereinafter making reference to figures 1 and 2, especially to the indications in the frequency domain of figure 2. The goal is to automatically evaluate and improve the stability and/or robustness and/or performance of the complete motor controller system, using the given motor controller 2 and the given electrical motor M, as well as the given load L characteristics. By mathematical calculation the plant transfer function H can be extracted from the measured signal (see, e.g., figure 1, where the respective signal is fed into the function block 14 for data analysis into the PC).

This extraction takes place by eliminating from the system transfer function CH previously known controller contribution. After that, a modified motor controller parameter set is defined. From the extracted plant transfer function a modified system transfer function can be generated; using the modified controller parameter set. The multiple values are representing a practically continuous frequency range, it is thus a representation of the total system behaviour tuned with the modified motor controller parameter set. This can be achieved without further physical measurements, but with calculations according to the present invention. After that, stability and/or robustness and/or performance of the motor controller system 1 can be readily evaluated using the modified system transfer function. After that, the motor controller system is improved by defining different modified controller parameter sets, executing the aforementioned steps for each modified controller parameter set and identifying the best parameter set out of the different controller parameters sets using the evaluations done before.

Now, making reference to figure 3, a further embodiment of the invention is described. With regard to the embodiment of figure 2, the figure 3 embodiment has several points 12,19,20. Via summing point 11 an excitation signal can be injected, e.g. a ramp excitation signal, that can be used for determination of rough and/or preliminary controller settings. Point 20 provides an, especially measurement, point for a further random and uncorrelated noise 17. The used method ejects noise in point 19 and traces the signal at point 16 and point 20, this way the behaviour of the true plant can be measured. So points 12 and 20 are measurement points.

Now, showing the control in more detail, we make reference to figure 4. Additionally to the set point position signal 23 and the feedback signal 13, the set point acceleration signal 21 and/or a setpoint velocity signal 22 are provided for, which are fed into the loop by a feed forward controller (FF). Following the signal processing are switches 24,25,26. These (digitally controlled) switches 24,25,26 turn respective filters on or off, respectively. These filters are in the specific embodiment shown as low pass filter, lead lag filter, and a notch filter, which is preferably an oblique notch filter.

Figure 5a shows a graphical, schematic representation of a modified system transfer function (C'H)₁ as generated by the present invention. The respective curve is shown as a Nyquist plot in frequency domain. That means the curve shown covers the respective values of the imaginary part (imaginary axis) vs. the real part (real axis) of the respective function value, attributed to the respective frequency, so that the plotted curve results. Thus it can be seen in figure 5a, that the system, represented by the curve, starts from the origin (low frequencies, or frequency 0, respectively), half circles the origin and resumes to very high imaginary parts of the complex function. Generally speaking, the Nyquist plot and the characteristic values of the phase margin Δϕ and the gain margin Δg may be used for the determination of the quality of a set of control parameters. For reasons of clarity, the graphical representation is kept very simple and schematic. A quarter 29 of the circle with radius 1 is indicated. The stability criteria, very roughly speaking, is known such, that the curve shown is representing stability in closed loop configuration of the (shown) open loop curve, when the open loop curve passes beyond, that means is lower then, the -1 on the real part axis. Thus, considering the (C'H) vector 27, or the 1+(C'H) vector 28, a quantity to be attributed to features of the control, such as stability etc., are the indicated phase margin Δϕ and the gain margin Δg, which, for reasons of clarity only, may be denoted as "distances to instability". ". The method preferably does not use phase margin and gain margin, although this can be done. Instead, e.g., a maximum bound on the sensitivity function is imposed. This is equal to the minimum distance from the point -1,0 in the Nyquist plot, and therefore a better robustness measure.

Figure 5b on the other hand shows, that the given stability criteria according to the Nyquist diagram can be inaccurate. As can be seen in the figure, the function curve comes much more closer to the -1 point on the real axis then can be estimated from the two quantities, the phase margin Δϕ and the gain margin Δg. The invention will account for such behaviours also. That means, that an auto tuning performed according to the invention will yield results, that reflect such otherwise hidden behaviours in the resulting stability and/or robustness and/or sensitivity evaluation.

This can be seen from figure 6. In figure 6 the operating frequency range 5 is represented together with the absolute of the (modified) system transfer function CH. According to the invention, the local evaluation value 6 is the local absolute - attributed a negative or positive sign depending on its location relative to a 0 dB crossing point 8 - of such function at the corresponding frequency 7. This can be seen from the graphical representation: a typical curve will be such that a fair amount of the curve will be below the crossing frequency 8, and another considerable portion will be above the respective crossing frequency 8. As both absolute values would be in principle positive, for reasons of clarity the absolute values representing frequencies below the crossing point 8 are positive. The absolutes of the curve above the crossing frequency 8 are shown as negative values. Thus one surface 30 (performance area) representing lower frequencies, and one surface 31 (robustness area) representing higher frequencies result. The method of the invention balances these two surfaces to result in an absolute local evaluation value.

The fitness function as shown in figure 6 quantifies the performance and robustness level of a particular controller in the frequency domains. This formula is heuristically determined in such a way that a compromise of robustness and performance is made: 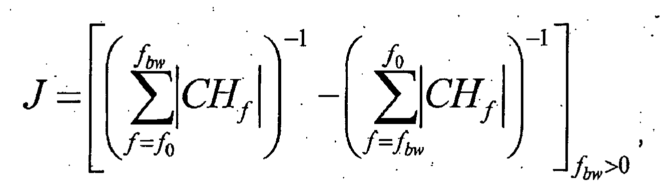 where J represents a "fitness parameter"; this can be a global evaluation value.

### Listing of reference numerals

- 1: motor controller system
- 2.: motor controller
- 3: control loop
- 4: test signal
- 5: operating frequency range
- 6: local evaluation value
- 7: frequency corresponding to local evaluation value
- 8: 0 dB crossing frequency
- 9: absolute values of CH
- 10: set point generator
- 11: summing point feedback
- 12: point, especially measurement point
- 13: feedback signal
- 14: data analysis (function block)
- 15: electromechanical system
- 16: random uncorrelated noise
- 17: random uncorrelated noise input
- 18: excitation signal
- 19: summing point
- 20: point, especially measurement point
- 21: set point acceleration signal
- 22: set point velocity signal
- 23: set point position signal
- 24: low pass filter switch
- 25: lead lag filter switch
- 26: notch filter switch
- 27: C'H(ω) vector
- 28: 1+C'H(ω) vector
- 29: (quarter) circle with radius 1
- 30: surface lower frequencies and/or performance area
- 31: surface higher frequencies and/or robustness area
- M: electric motor
- L: load
- C: controller transfer function
- H: plant transfer function
- CH: system transfer function
- C'H: modified system transfer function
- N: noise generator
- V: signal noise
- W: signal noise and controller output
- Δϕ: phase margin
- Δg: gain margin
- f_{bw}: crossing frequency (corresponds with ref. num. 8)
- f₀: starting frequency, minimum frequency
- fₑ: ending frequency, maximum frequency

## Claims

1. Method of automatically adjusting parameters of a motor controller system (1), with an electric motor (M), a corresponding motor controller (2) with a control loop (3), and, especially, a load (L) driven by the electric motor (M), the motor controller system (1) having kinematic characteristics relevant for controlling the system, the method comprising the steps of
- injecting into the control loop (3) of the motor controller system (1) one test signal (4) or several test signals, the test signal (4)or the test signals covering multiple frequencies, respectively,
- measuring a system transfer function (CH) of the motor controller system (1) at multiple frequencies, the multiple frequencies representing a relevant operating frequency range (5),
**characterized in that**
the stability and/or robustness and/or performance of the motor controller system (1) is automatically evaluated and improved by the following steps:
1.1 generate a plant transfer function (H) from the system transfer function (CH) by eliminating from the system transfer function (CH) previously known controller contribution,
1.2 define a modified motor controller parameter set,
1.3 generate multiple values of a modified system transfer function (C'H) out of the plant transfer function (H), using the modified controller parameter set, the multiple values representing a practically continuous frequency range, where the practically continuous frequency range corresponds to the relevant operating frequency range (5) of the motor controller system (1),
1.4 evaluate stability and/or robustness and/or performance of the motor controller system (1) using the modified system transfer function (C'H),
1.5 improving the motor controller system (1) by defining different modified controller parameter sets, executing steps 1.3 to 1.4 for each modified controller parameter set and identifying the best parameter set out of the different controller parameter sets using the evaluations done according to 1.4.

2. The method of claim 1, **characterized in that**
2.1 for each of the multiple values of the modified system transfer function (C'H) generate a local evaluation value (6) that is relevant for the stability and/or robustness and/or performance of the motor controller system (1) locally, i.e. at the corresponding frequency (7), and
2.2 generate out.of all local evaluation values (6) at least one global evaluation value that represents stability and/or robustness and/or performance of the motor controller system (1) using the modified controller parameter set, by combining all local evaluation values (6) into a total resulting stability and/or robustness and/or performance indication, representing the entire continuous frequency range (5), and, finally,
2.3 using the global evaluation value for evaluation according to 1.4 above.

3. The method of claim 1 or 2, **characterized in that** before injecting the test signal (4) into the loop (3), polarity, break away level, noise level, and a preliminary controller gain of the motor controller system (1) are determined to control the motor controller system (1) within predefined, rough preliminary precision limits.

4. The method of claim 3, **characterized in that** results of the determination are used for a first motor controller parameter set which is used during injection of the test signal (4) according to claim 1 above.

5. The method of one of claims 1 to 4, **characterized in that** the test signal (4) is a random noise signal.

6. The method of one of claims 1 to 5, **characterized in that** the controller (2) is a P or Pl controller, lead lag filter (LLF) and/or notch filter (NF) and/or lowpass filter (LF), and the parameter set comprises the respective parameters.

7. The method of one of claims 1 to 6, **characterized in that** the functionalities are partly or completely implemented into a DSP and FPGA.

8. The method of one of claims 1 to 7, **characterized in that** the functionalities are partly or completely implemented into a hardware separate from the controller hardware, especially into a PC and/or a notebook and/or a customized implementing hardware.

9. The method of one of claims 1 to 8, **characterized in that** the results from the method are stored in a data file, which comprises at least a partial controller parameter set, and which is useable for different but similar motor controller systems (1).

10. The method of one of claims 1 to 9, **characterized in that** the measurement of the system transfer function (CH) is done in closed loop configuration of the motor controller system (1).

11. The method of one of claims 1 to 10, **characterized in that** the practically continuous frequency range (5) extends from 1 Hz to 1024 Hz, especially from 1 Hz to 512 Hz.

12. The method of one of claims 1 to 11, **characterized in that** from 3 to 4096 modified system transfer function (C'H) values are generated, preferably from 500 to 2000, most preferably from 900 to 1100, and especially 1024 values.

13. The method of one of claims 2 to 12, **characterized in that** the local evaluation value (6) contains the local sensitivity based on the open loop modified system transfer function (C'H).

14. The method of one of claims 2 to 13, **characterized in that** the local evaluation value (6) is derived from the local absolute value of the open loop modified system transfer function (C'H).

15. The method of one of claims 2 to 14, **characterized in that** the global evaluation value is derived by balancing the local evaluation values (6), especially the weighted sum or the integral of all local evaluation values, at frequencies substantially below a 0 dB crossing frequency (8) of the absolute values (9) of the modified system transfer function (C' H) against the local evaluation values (6), especially the weighted sum or the integral of all local evaluation values (6), at frequencies substantially above the 0 dB crossing frequency (8).

16. The method of one of claims 2 to 15, **characterized in that** the global evaluation value is derived from the maximum local sensitivity considering the amount of encirclements of (-1,0) on the Nyquist plot and the open loop transfer function (C'H).

17. The method of one of claims 1 to 16, **characterized in that** the different modified controller parameter sets are generated by a genetic algorithm and/or rule of thumb estimation.

18. The method of one of claims, to 17, **characterized in that** the test signal is generated by a noise generator integrated into a DSP within the controller hardware.

19. Electrical motor controller (2), with integrated or separate regulator, which is configured and/or designed and/or programmed for executing the method according to one of claims 1 to 18.
